# EUROPEAN PATENT APPLICATION

(11) **EP 1 037 509 A2**
(43) Date of publication of application: **20.09.2000**
(21) Application number: 99305893.2
(22) Date of filing: 26.07.1999
(51) Int. Cl.: H05B 6/12

(54) **A ceramic bowl of an induction-heating ceramic cooker and a method for production thereof**

(30) Priority: 08.03.1999 KR 9903589; 18.03.1999 KR 9909150; 23.03.1999 KR 9904620; 30.03.1999 KR 9910900
(71) Applicant: Mama Co. Ltd., Kumchun-ku, Seoul (KR)
(72) Inventor: Yim, Dong-Won, Bundang-ku, Songnam-shi, Kyounggi-do (KR); Kim, Young-Sun, IIsan-ku, Goyang-shi, Kyounggi-do (KR)
(74) Representative: Votier, Sidney David

(57) **Abstract**

The subject invention relates to a ceramic bowl of a cooker of induction-heating style, and a method for production thereof. It relates more particularly to the bowl of a ceramic cooker, which can be used with such conventional heating means as gas ranges and the like as well as with inductive heating means like electric pressure cookers, and the method for production thereof. It especially relates to a cooker excellent in anticorrosion resistance and durability, the taste of the food cooked in its product more delicious than otherwise due to the far infrared rays emitted by the ceramic material.

Characteristically, in production of the ceramic cooker for induction-heating, disclosed in Example 1 of embodiment of the present invention, ceramic particles 5 and metal particles 6 each by an equal quantity are mixed, and this mixture is put in a mold, where it is heated and pressed into a bowl; while the ceramic bowl, disclosed in Example 2, is produced by coating the surface of a ceramic bowl, shaped in advance making use of the powder of such a mineral emitting far infrared rays as germanium, to form a metallic layer 4 obtain skin effects; and the one, disclosed in Example 3, is produced by formation of a ceramic layer 3, in a unitary structure, on both sides of a metallic bowl 2 having many a hole bored through beforehand.

## Description

A ceramic bowl of an induction-heating ceramic cooker and a method for production thereof

### Brief Description of Drawings

Fig. 1 is a sectional view of the bowl in Example 1 of the induction-heating ceramic cooker by the present invention.

Fig. 2 is a sectional view of the bowl in Example 2 of the induction-heating ceramic cooker by the present invention.

Fig. 3 is a sectional view of the bowl in Example 3 of the induction-heating ceramic cooker by the present invention.

Fig. 4 is a preferable example of the metallic bowl in Fig. 3.

Fig. 5 is a block diagram showing the process of producing the induction-heating ceramic bowl of the present invention.

Fig. 6 a block diagram showing another process of producing the induction-heating ceramic bowl of the present invention.

Fig. 7 is a block diagram showing still another process of producing the induction-heating ceramic bowl of the present invention.

Fig. 8 is a sectional view showing the process of heating the induction-heating ceramic bowl of the present invention.

Fig. 9 is a sectional view showing the use of a ceramic bowl.

Fig. 10 is a sectional view of a conventional fireproof cooker bowl.

Fig. 11 shows the process of producing the fireptoof cooker bowl illustrated in (a) of Fig. 10.

| | |
|---|---|
| 1...... ceramic bowl | 2...... metallic bowl |
| 3...... ceramic layer | 4...... metallic layer |
| 5...... ceramic particle | 6...... metal particle |
| 17...... preparatory stage | 18...... shot peening stage |
| 19...... surface cleaning stage | 19A.... dipping stage |
| 19B.....spraying stage | 20.... .. drying stage |
| 21...... sputtering stage | 21A..... ion-plating stage |
| 22...... metallizing stage | 23...... cooling stage |
| 27...... trimming stage | 28...... heat treatment stage |

### Detailed Description of Invention

The present invention relates to the bowl of a ceramic cooker of induction-heating type and a method for production thereof. More particularly, it relates to a ceramic cooker bowl for cooking food by both the conventional way of heating with the use of things like a gas range and a way of induction of heating as is done for electric pressure cooker, as well as to a method for producing such a cooker bowl.

The present invention is related to a ceramic cooker bowl and a method for production of one, which excels in anti-corrosion resistance and durability and, furthermore, can make the food cooked in it more delicious, than otherwise, due to the far infrared rays emitted by the ceramic material.

Fig. 8 is to illustrate the process of heating an induction-heating cooker bowl, which belongs to the technical field of the present invention.

In the case of an induction-heating cooker bowl, given in the pre-ceding drawing, first a high-frequency current is supplied from the circuit of an inverter to the heating coil. Then a high-frequency magnetic field is generated around that heating coil, and as this magnetic field is made to concentrate on the bowl, an eddy current is generated, which losing its energy, the bowl gets heated.

Generally, such induction-heating cooker bowls are made of metallic material like steel, aluminum, stainless steel, etc.

When a bowl is made of steel, it has an advantage in that it is possible to cook in stability, because the skin effects occur even in a magnetic field lower than 20kHz, but in the case of steel there is an inherent problem that the material easily corrodes at moisture, and heating takes much time because of the low rate of heat conduction.

Now the 'skin effect' means the phenomenon that the part where the electric current flows of the surface of a metallic plate (section where high frequency magnetic field is generated) concentrates on a certain area, and when this phenomenon occurs the resistance of the steel plate becomes even regardless of its thickness, while at the same time no magnetic flux penetrates the steel plate.

If a cooker bowl is made of aluminum, the cooker gets lighter in weight than one of steel-made is, and, not merely is its heat-conduction excellent, but it has an advantage of non-corrosion owing to the oxides layer formed by its reaction with the air. But this also has its problem in that the heating coil inside the bowl must be lengthened to increase its first resistance, because the resistance of aluminum is smaller than that of steel. That the skin effects occur only in a high frequency magnetic field of 50 kHz or more, poses another problem.

Then a cooker bowl made of stainless steel undergoes so small of electric resistance as to preclude induction heating. It needed an adhesion to its bottom of an alloyed metallic plate, like steel, of larger resistance to help induction of heat. Because it is poor of heat conduction it has to use a material of excellent heat conduction like aluminum together with it, and then, however, the cooker gets heavy and unwieldy. Adhesion of plates, for instance, often risks flaking, too.

To solve all these problems a way of coating foil of aluminum, tungsten or the like onto the bottom of a bowl, was suggested. Cookers produced this way were possessed of an advantage of the skin effects occurring in a magnetic field of low frequency, but they had disadvantages also. Their outward appearances were anything but neat or beautiful, the foil of aluminum or others showing outside. The chemical reaction of the food or seasonings with the foils under heat, causing degradation of the cookers' durability, was another problem. The lower efficiency of heating, caused by the placement of foils at the bottom of the bowls so that food must be cooked by the heat reaching it via a layer of lower heat conductivity, was still another. The extra process of work to apply aluminum foil, or others, preformed after the bowl was produced, was yet another.

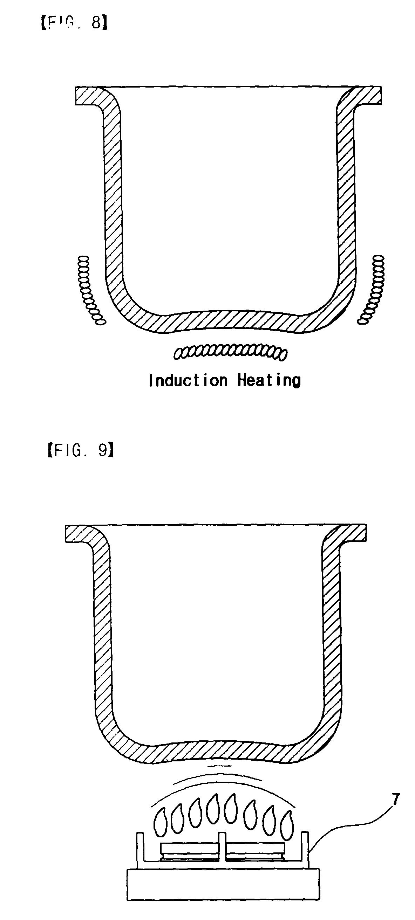

Fig. 9, of the attached drawings, is a sectional view of ordinary ceramic cooker in use. An enameled cooker looks the same.

In the cases of these cookers, heat is not generated even if a high frequency magnetic field is provided and, therefore, they have to be heated with a conventional heating means 7 like a gas range. But when the cooker is heated in this way, far infrared rays are irradiated from the mineral substances of the cookers, especially from the materials that emit far infrared rays, to render the tastes of the food cooked therein more delicious. These cookers can be made beautiful in outward appearance, too, because it is possible to form various figures or patterns on their surfaces, which is another advantage of theirs.

However, with the advance of industrial techniques and to meet the demand of consumers for more leisure, cookers of direct heating types are in a trend of getting improved or refashioned into those of induction-heating types.

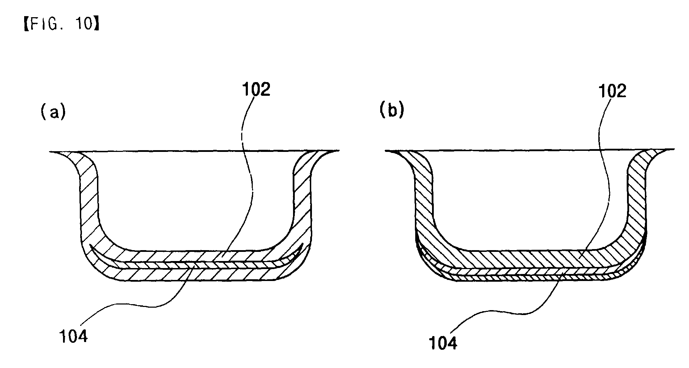

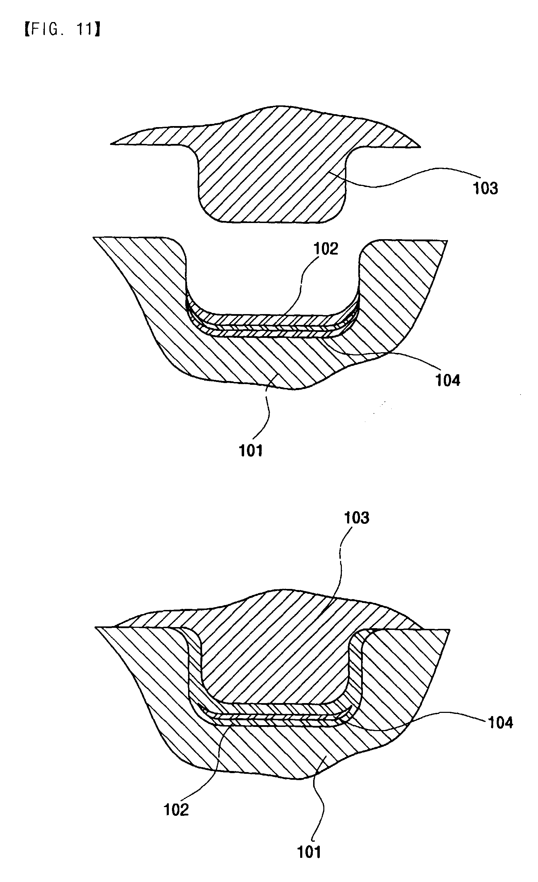

In view of all these, a development of ceramic induction-heating cooker, uniting only the good points each of the pottery cooker and the induction-heating type cooker, has been in active progress with each maker. Some embodiments of such a new concept in the field are given in Figs. 10 and 11 (Korean Utility Models Gaz. 96-7002, of 16 Aug. '99).

According to the drawings, attached to the specification of the present invention, and the description of Korean Utility Model Gaz., the aforesaid fireproof type cookers are described to have been produced by inserting or adhering foils of aluminum or steel, copper, tungsten, stainless steel, etc. in the stage of their formation.

In other words, the inside of the lower plate 101 of the mold is filled with fireproof ceramic material 102 by about half, a metallic foil 104 is mounted on it, ceramic material 102 is again poured thereon, and all is heat-pressed with an upper plate 103 (Example 1); the reverse side surface of the metallic foil 104 is adhered by adhesives to an already baked fireproof pottery, then the obverse side surface of that metallic foil is coated fireproof, and then all is baked for the second time (Example 2).

According to the descriptions in the publication gazette, the fireproof bowl, produced by Example 1, not merely can have an aesthetic beauty in appearance like conventional cookers, not of induction-heating type, because the metallic foil 104 is evenly embedded inside, but has solved the most serious problem with conventional induction-heating cookers, that is, the decrease in durability, while making it possible to induce occurrence of the skin effects even in a magnetic field of lower intensity, let alone the saving on unit production costs through simplification of the production processes.

In the fireproof bowl, produced in Example 2, it is described that oxygen is blocked off the metallic foil 104, thereby improving the cooker's anti-corrosion resistance, and by means of placing a metal plate of good heat conductivity at the bottom of the cooker it is made possible to cook not only by induction-heating but by direct heating also.

However, in the case of such fireproof cookers, when they are heated by the of high frequency magnetic field, the area (where the metal foil is embedded) where the skin effects are to occur thereby is limited to the bottom of the bowl only, and for this reason so less heat than necessary for cooking is generated, wherefore, in fact the food does not get cooked satisfactorily.

Also, because very malleable metallic foil 104 is enwrapped in ceramic material 102 of great brittleness, the two different materials are likely to sever from each other, or the ceramic part gets cracked, due to their different strain rates, when they are heated.

Although these fireproof cookers can be supposedly satisfactory to consumers, when considered at the angles of the imagined usefulness, their difficulty in processibility is practically forbidding, and this is why no actual products are as yet on the market.

The present invention has been made with an objective to solve the aforesaid problems, and it is to provide a ceramic cooker, which excels in processibility, anti-corrosion resistance, and durability, and can cook the more tasty food due to the far infrared rays being emitted from the ceramic material, together with a method for its best effective production.

In order to accomplish these aims the ceramic cooker bowl of the present invention has been so devised at the time of designing, in consideration of both the possible transformation of the two heterogeneous materials at the time of expansion under heat and the amount of heat generated by the skin effects, that the severance by flaking of the two materials of different nature can be prevented and sufficient heat for satisfactory cooking of food can also be secured.

To begin with, the induction-heating ceramic cooker bowl in Claim 1 of the present invention is produced by first evenly mixing particles of metal and ceramic and later heat-pressing the mixture in a mold.

This way the metal particles are evenly distributed all over the internal and external surfaces of the bowl, and therefore it is possible that the skin effects occur all over the surfaces and sufficient heat for satisfactory cooking is secured, when the high frequency magnetic field is created.

Further, since minute particles of metal and ceramic are evenly distributed side by side in close contact, elongation of the metal particles can very well be restrained (or withstood) by the ceramic particles, when the metal particles expand under heat, and even without this sort of restraint the two heterogeneous materials can behave themselves as if in continuum, thus preventing severance of the two materials.

The induction-heating ceramic cooker bowl, disclosed in Claim 2 of the present invention is characterized in that the surface of the bowl, formed in advance with the use of powder of such a mineral as germanium emitting far infrared rays, is coated with a metallic layer which can produce the skin effects.

Produced this way, the metallic layer which is formed first sticks to the surface of the ceramic bowl with an adhesion almost like that of molecular bonding, and as it is coated with more metallic particles in repetition for increase of the thickness, the total metallic layer becomes one almost like something made by fusion of similar materials, with a result that there will be no flaking, that is, the ceramic and the metallic layers will not sever from each other when they expand by heating.

The induction-heating ceramic cooker bowl, described in Claim 3 of the present invention, is characterized in that it is produced by forming a ceramic layer in a unitary structure on both surfaces of a metallic bowl, which has many holes bored through in advance.

The strength of the metallic bowl decreases as much as the areas these holes occupy, and from this cause the ceramic layer can squarely withstand the expansion of the metallic bowl under heat, resulting in no severance between metallic and ceramic layers by flaking.

### Embodiment

Below, the induction-heating ceramic cooker bowl and the method for its production in the present invention are described in detail, making reference to the attached drawings.

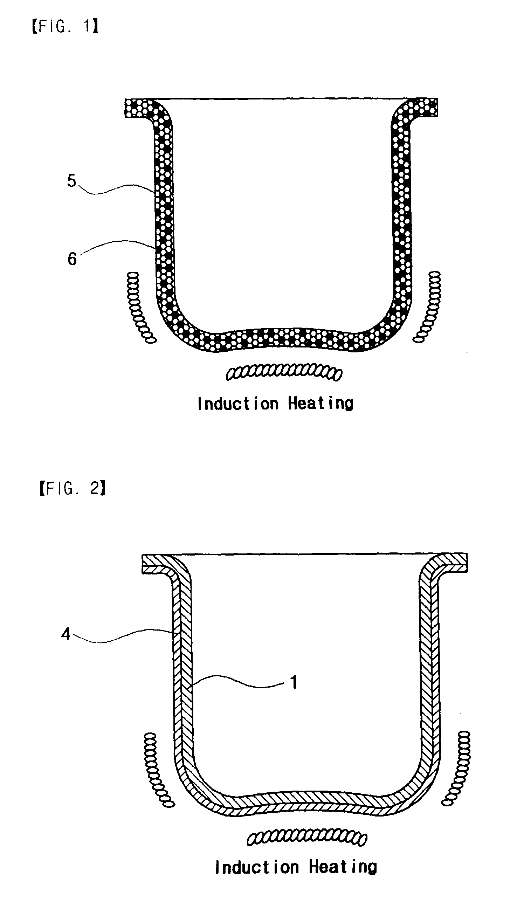

Fig. 1 is a sectional view of the induction-heating ceramic bowl in Example 1.

The cooker bowl is produced by the heat-pressing, in a mold, of a mixture of the powder of such metallic particles 6 as of steel, aluminum, copper, stainless steel, and tungsten and such powder of the glass or earthenware, or mineral germanium and ceramic particles 5.

The induction-heating ceramic cooker bowl produced this way gets evenly heated thanks to the skin effects all over when high frequency magnetic field is generated, because the metallic particles 6 are distributed over the surfaces of, and in the layers of, the walls alike. Accordingly, it becomes possible to provide heat evenly all over the cooker bowl and the food can be cooked completely, leaving no portion less well cooked nor portion scorched.

Not merely that, because minute ceramic particles 5 and metallic particles 6 are together in close contact, the elongation of the metallic particles 6, when they expand under heat, can be restrained by the nearby ceramic particles 5, and they all behave themselves as though they were in continuum, whereby no flaking occurs.

Fig. 2 is the sectional view of an induction-heating ceramic cooker bowl of the present invention, Example 2.

This bowl is produced by coating the outer surface of a ceramic cooker bowl 1, prepared in advance, with a metallic layer 4 of a certain thickness, the thickness of the said metal layer, however, demanding control because it has direct relevance to the quantity of the heat generated for the cooker, the cooker's durability, and the possible flaking of materials under heat.

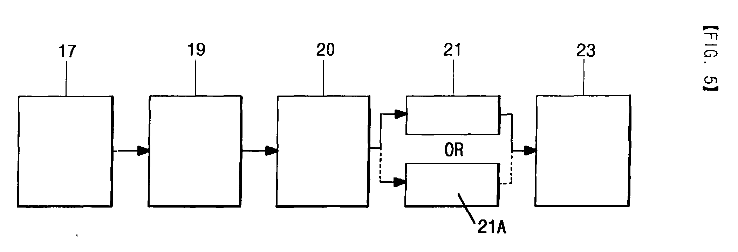

Fig. 5 is a block diagram showing the production process in the case of producing the induction-heating ceramic cooker by a sputtering or ion-plating method.

The process is as follows:

### Step 1: Preparatory (17)

A ceramic cooker bowl 1 of a desired shape and size is produced.

### Step 2: Cleaning of the surface (19)

Dust and filth on the surface of the cooker 1 are removed.

At need, acid cleaning is preformed.

### Step 3: Drying (20)

The surface of the ceramic cooker bowl 1 is dried.

### Step 4: Sputtering (21) or ion-plating (21A)

A metallic layer 4 of even thickness is provided to the ceramic cooker bowl 1 on its surface.

The thickness of this metallic layer 4 varies, depending upon the kinds of the metal, but it is preferable to be limited, in consideration of the specific natures of the product, to 0.5mm∼3.00mm.

While Step 4 can be performed in a single process, it still can be divided into several processes, increasing the thickness of the metallic layer 4 in graduation, at will.

### Step 5: Cooling (23)

This is a step for cooling the temperature of the product to room temperature, and the crystallization structure of the metallic layer 4 is adjusted during this step.

The crystallization structure of the metallic layer 4 has to do with both the durability and anti-corrosion resistance of the product, also affecting the electric efficiency.

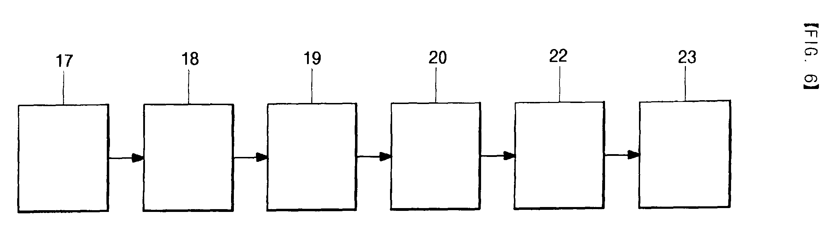

Meanwhile, Fig. 6 is a block diagram to show the process in production of the induction-heating ceramic cooker bowl of the present invention by an injection method, divided in the following several steps.

### Step 1: Preparatory (17)

The ceramic cooker bowl 1 of a desired shape and size is produced.

### Step 2: Shot peening (18)

The surface of the ceramic cooker bowl 1 is, by means of shotting, rendered rugged, full of minute prominences and depressions. This step has to do with the adherence of the molten metal to be injected and the ceramic cooker bowl 1.

### Step 3: Cleaning of the surface (19)

Dust and filth stuck on the surface of the ceramic cooker bowl 1 are removed. When desired, acid cleaning is performed.

### Step 4: Drying (20)

The outer surface of the ceramic cooker bowl 1 is dried.

### Step 5: Injection (22)

The outer surface of the ceramic cooker bowl 1 is evenly sprayed with molten metal of high temperature by injection, whereby a metallic layer 4 of even thickness is formed thereon.

The thickness of the metallic layer 4 can vary, depending upon the kinds of the metal, but it is preferred to be limited, in consideration of the specific natures of the product, to 0.5mm ∼ 3.00mm.

Meanwhile, it is also possible to divide this injection process into several times, repeating the spraying for about 0.5mm each time until the desired total thickness is obtained.

### Step 6: Cooling (23)

This step is for lowering the temperature of the product to room temperature, and during this step the crystallization structure of the metallic layer 4 is also adjusted.

The crystallization structure of the metallic layer 4 has to do with the product's durability and anti-corrosion resistance, seriously affecting the efficiency of electricity.

The ways of depositing materials of different natures include the mechanical, physical, and chemical methods.

Now in the case of Example 2 of the present invention, however, the chemical method which requires supply of electric energy can not be made use of, because the ceramic cooker bowl 1 is of an insulated object.

Thereupon, the surface of the ceramic cooker bowl 1 is coated with the metallic layer 4 by physical vapor deposition(See Table 1)

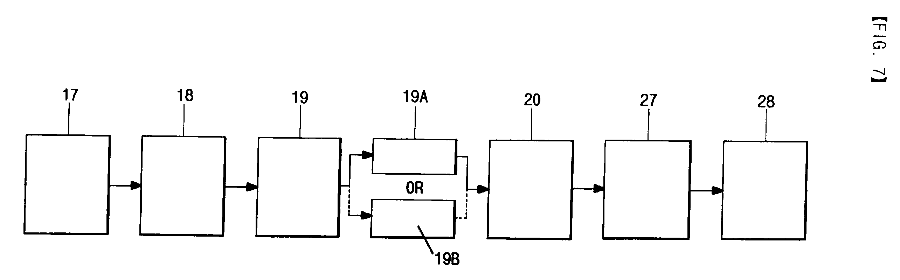

Fig. 7 is a production process chart for the induction-heating ceramic cooker bowl of the present invention when produced by spraying or dipping, whose order being as follows:

### Step 1: Preparatory (17)

The cooker bowl 1 of a desired shape and size is produced.

### Step 2: Shot peening (18)

Minute prominences and depressions are formed on the surfaces of the ceramic cooker bowl 1 by shot peening. This process affects the mutual adhesion between the surface of the ceramic cooker bowl 1 and the liquid mixture of ceramic and metallic particles which the former is to be coated with.

### Step 3: Cleaning of the surface (19)

The surface of the cooker 1 is cleaned of dust or filth. When necessary acid cleaning is preformed.

### Step 4: Dipping (19A) or spraying (19B)

A step of applying to the outer surface of the ceramic cooker bowl 1 a liquid ceramic-metallic mixture to an even thickness, and this step is repeated in succession, until the desired thickness of coating is secured.

### Step 5: Drying (20)

The outer surface of the cooker bowl 1 is dried.

### Step 6: Trimming (27)

The quality of the ceramic cooker bowl 1 is inspected, and the uneven portion, if any, is scraped and polished.

### Step 7: Heat-treatment (28)

Heat is applied to the ceramic cooker bowl 1 and the metallic layer 4 is fixed.

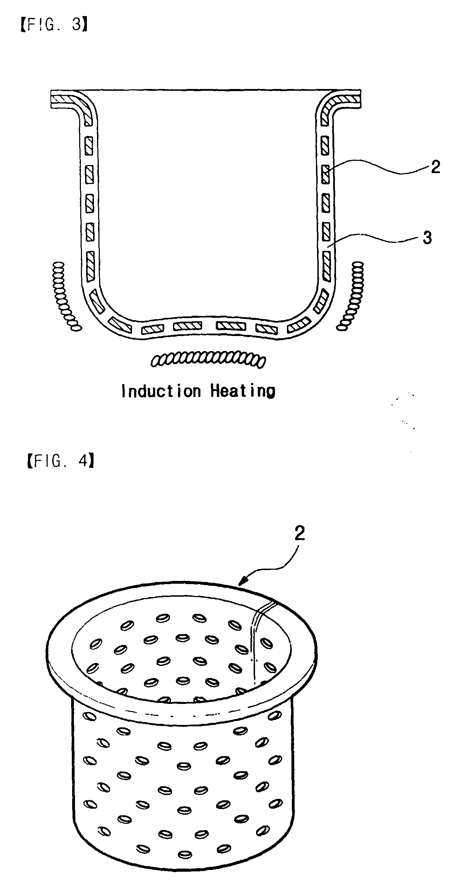

Figs. 3 and 4 are respectively a sectional view of Example 3 of the induction-heating ceramic cooker bowl of the present invention and an illustration of a preferable example of the metallic bowl made use of therefor.

As can be seen in the above drawing, Example 3 of embodiment of the present invention is produced by coating both the surfaces of the metallic bowl 2, with many holes bored in the surfaces, with a ceramic layer 3.

In this way it is possible for the ceramic layer 3 on both surfaces of the metallic bowl 2 to join through the numerous holes bored in them, thereby elevating the stability of the cooker bowl 2 and strengthening the adhesion on the interface. Wherefore, the durability of the cooker gets greatly improved.

The strength of the metallic bowl gets weakened in proportion to the numerous holes, and by this reason the ceramic layer can sufficiently resist the expansion of the metallic bowl under heating, resulting in no severance of the metallic bowl and ceramic layer from each other.

As has been stated above, because the bowl of the induction-heating ceramic cooker in Example 1 of embodiment is produced by formation by heat-pressing of ceramic particles 5 and metallic particles 6 in a mold, the cooker bowl has the merit of being used either by induction-heating or conventional direct heating means 7. Moreover, the food cooked in the cooker tastes more delicious thanks to the far infrared rays emitted from the ceramic particles 5.

Also, because the metallic particles 6 are evenly distributed over both surfaces of the bowl, the skin effects occur all over, when the high frequency magnetic field is provided, thus generating sufficient heat for cooking the food satisfactorily.

Moreover, because the ceramic 5 and metallic 6 particles of minute size are placed side by side in close contact, the elongation of the said metallic particles 6 can be restrained by the ceramic 5particles when the former expand under heat, not to say of the advantage that the two heterogeneous materials behave as if they were in continuum, precluding that undesirable phenomenon of their severance from each other, flaking or peeling off, otherwise.

In Example 2 of embodiment of the induction-heating ceramic cooker bowl, the first metallic layer adheres to the outer surface of the ceramic bowl 1 nearly as tightly as if it did by molecular bonding, and as the layer gets thickened gradually by repeated coating it becomes in fine as if rendered by fusion of an identical material, with a result that it will not sever from the ceramic bowl by flaking even when the metallic layer 4 of the ceramic bowl 1 is expanded under heating.

And because the inner surface of the bowl is slippery, its cleaning is easy, and the surface which comes in contact with the food is of ceramic material, it has another advantage that there is no danger on the part of diners to take in metallic elements. Moreover, the cooker's external appearance can be fine and made beautiful.

In Example 3 of embodiment of the induction-heating ceramic cooker bowl of the present invention, both the inner and outer surfaces of the metallic bowl 2 are each coated with a ceramic layer 3, and so it is possible to heat the bowl by conventional direct heating means 7 as well as by induction-heating, a further advantage being that thanks to the emission of far infrared rays from the ceramic layer 3 the taste of the food cooked therein is more delicious than when cooked in other sorts of cookers.

Furthermore, the strength of the metallic bowl 2 gets decreased in proportion to the sizes of the numerous holes bored in its surface it is possible for the ceramic layer 3 to sufficiently withstand the expansion of the metallic bowl 2, and, as a result, there does not occur the undesirable phenomenon of severance of the ceramic layer 3 and the bowl 2 from each other under heat.

## Claims

1. A ceramic cooking vessel of an induction-heating type, comprising powder of a mixture of metal particles and ceramic particles.

2. A ceramic cooking vessel of an induction-heating type, comprising a coating of a metal layer with necessary thickness on the exterior surface of the ceramic vessel.

3. A ceramic cooking vessel of an induction-heating type, comprising a metallic vessel, the interior and exterior surfaces of which have numerous holes, wherein a ceramic layer is bound on said internal and exterior surfaces thereof.

4. A method of manufacturing a ceramic cooking vessel of an induction-heating type of Claim 2, comprising:
the first step of preparation by manufacturing a ceramic vessel of a necessary form and size;
the second step of surface-cleansing by removing the dust and dirt from the exterior surface of the ceramic vessel and performing acid cleaning if necessary;
the third step of drying the exterior surface of the ceramic vessel;
the forth step of sputtering or ion-plating by forming a metallic layer of uniform thickness on the exterior surface of the ceramic vessel; and
the fifth step of cooling by lowering the temperature of the final product to room temperature and adjusting the crystallization structure of the metallic layer.

5. A method of manufacturing a ceramic cooking vessel of an induction-heating type of Claim 2, comprising:
the first step of preparation by manufacturing a ceramic vessel of a necessary form and size;
the second step of forming minute prominences and depressions on the exterior surface of the ceramic vessel by shot peening;
the third step of surface-cleansing by removing the dust and dirt from the exterior surface of the ceramic vessel and performing acid cleaning if necessary;
the fourth step of drying the exterior surface of the ceramic vessel;
the fifth step of forming a metal layer of uniform thickness by evenly spraying a molten metal of high temperature onto the exterior surface of the ceramic vessel; and
the sixth step of cooling by lowering the temperature of the final product to room temperature and adjusting the crystallization structure of the metallic layer.

6. A method of manufacturing a ceramic cooking vessel of an induction-heating type of Claim 2, comprising:
the first step of preparation by manufacturing a ceramic vessel of a necessary form and size;
the second step of forming minute prominences and depressions on the exterior surface by shot peening;
the third step of surface-cleansing by removing the dust and dirt from the exterior surface of the ceramic vessel and performing acid cleaning if necessary;
the fourth step of dipping or spraying by coating the ceramic-metal mixture solution in uniform thickness onto the exterior surface of the ceramic vessel and coating the same one or more times until obtaining necessary thickness;
the fifth step of drying the exterior surface of the ceramic vessel;
the sixth step of a final polish by inspecting the quality of the ceramic vessel and polishing the uneven surfaces; and
the seventh step of heat treatment by heating the coated ceramic vessel for fixing the metallic layer.
